# EUROPÄISCHE PATENTSCHRIFT

(11) **EP 0 558 890 B1**
(45) Veröffentlichungstag und Bekanntmachung des Hinweises auf die Patenterteilung: **27.03.1996**
(21) Anmeldenummer: 93100433.7
(22) Anmeldetag: 14.01.1993
(51) Int. Cl.: F16B 13/06

(54) **Spreizdübel**
Expansion dowel
Cheville d'expansion

(30) Priorität: 06.03.1992 DE 4207316
(43) Veröffentlichungstag der Anmeldung: 08.09.1993
(73) Patentinhaber: TOGE - Dübel A. Gerhard GmbH, D-90431 Nürnberg (DE)
(72) Erfinder: Gerhard, Anton, W-8500 Nürnberg 80 (DE)
(74) Vertreter: Rau, Manfred, Dr. Dipl.-Ing.

(56) Entgegenhaltungen:
- EP-A- 0 143 922
- WO-A-90/08265
- DE-A- 3 344 232
- DE-A- 3 544 283
- US-A- 1 431 176

## Beschreibung

Die Erfindung betrifft einen Spreizdübel nach dem Oberbegriff des Anspruches 1.

Derartige Spreizdübel sind aus der DE-39 34 534 A1 (entsprechend US-A-5 112 174) bekannt. Sie haben sich insbesondere zur Befestigung von Rahmen, beispielsweise Fenster- oder Türrahmen in Wänden aus Beton oder Mauerwerk aus sogenannten Vollziegeln außerordentlich bewährt. Die die Spreiz-Hülse aufnehmenden Bohrungen weisen einen Durchmesser auf, der nur wenige Zehntel Millimeter größer ist als der Außendurchmesser der Spreiz-Hülse. Durch Einziehen des Spreiz-Konus in die Spreiz-Hülse im Bereich des Einschubendes erfolgt eine schnelle zuverlässige Verspreizung der Spreiz-Hülse gegenüber der Wand der Bohrung des Mauerwerks.

Es sind weiterhin sogenannte Hohlraum-Dübel bekannt, die zum Einsatz in Hohlraum-Wänden, insbesondere Hohlraum-Mauerwerk dienen, wobei derartiges Hohlraum-Mauerwerk in der Regel durch sogenannte Gitterziegel gebildet wird. Derartige Hohlraum-Dübel weisen eine Spreiz-Hülse mit einem Schlitz auf, wobei diese Spreiz-Hülse im Bereich ihres Einschubendes mit einem Gewinde für die Spreiz-Schraube versehen ist; damit die Hülse in diesem Bereich sich nicht öffnen kann, ist über ihr Ende ein Haltering geschoben. Zwischen diesem durch einen Haltering gegen Aufspreizen gesicherten, das Innengewinde tragenden Endabschnitt und dem zylindrischen nur von einem Längsschlitz durchsetzten Trag-Abschnitt der Spreiz-Hülse ist ein Hohlraum-Spreiz-Abschnitt ausgebildet, der in Längsrichtung der Spreiz-Hülse verlaufende Längsstege aufweist. Dieser Hohlraum-Spreiz-Abschnitt ist gegenüber dem Außendurchmesser der Spreiz-Hülse verjüngt. Die Längsstege sind im Bereich ihrer Mitte leicht nach außen gebogen, so daß sichergestellt ist, daß bei einem Anziehen der Spreiz-Schraube die Längsstege nach außen gebogen werden. Wenn dieser Hohlraum-Spreiz-Abschnitt in einen Hohlraum eines Gitterziegels gelangt, dann ist ein zuverlässiges Aufspreizen gewährleistet. Wenn dagegen dieser Hohlraum-Spreiz-Abschnitt in einen Gittersteg kommt, dann ist ein auszugfestes Verspreizen nicht möglich.

Der Erfindung liegt die Aufgabe zugrunde, einen Spreizdübel der gattungsgemäßen Art zu schaffen, der immer in Hohlraum-Mauerwerk verankerbar ist und der auch in Massivwänden einsetzbar ist.

Diese Aufgabe wird erfindungsgemäß durch die Merkmale im Kennzeichnungsteil des Anspruches 1 gelöst.

Durch die Erfindung wird also ein Spreizdübel geschaffen, der einen in Massivwänden zuverlässig verspreizbaren End-Spreiz-Abschnitt und einen Hohlraum-Spreiz-Abschnitt aufweist, wobei weiterhin die Ausgestaltung so getroffen ist, daß zuerst der Hohlraum-Spreiz-Abschnitt aufgespreizt wird. Wenn also der Hohlraum-Spreiz-Abschnitt sich in einem Hohlraum befindet, werden zuerst dessen Längsstege aufgespreizt. Wenn dagegen die Längsstege gegen eine Bohrungswand anliegen, dann wird unter entsprechend erhöhtem Kraftaufwand der End-Spreiz-Abschnitt gespreizt.

Zahlreiche vorteilhafte Weiterbildungen der Erfindung ergeben sich aus den Unteransprüchen und der nachfolgenden Beschreibung eines Ausführungsbeispieles anhand der Zeichnung. Es zeigt
- Fig. 1: einen aus Spreiz-Hülse, Spreiz-Schraube und Spreiz-Konus bestehenden Spreizdübel in einer Längs-Draufsicht,
- Fig. 2: eine Teildarstellung des Spreizdübels in aufgebrochener Darstellung,
- Fig. 3: einen Einsatz des Spreizdübels zur Befestigung eines Rahmens an einem Hohlraum-Mauerwerk und
- Fig. 4: einen Einsatz des Spreizdübels an einer anderen Stelle des Hohlraum-Mauerwerks.

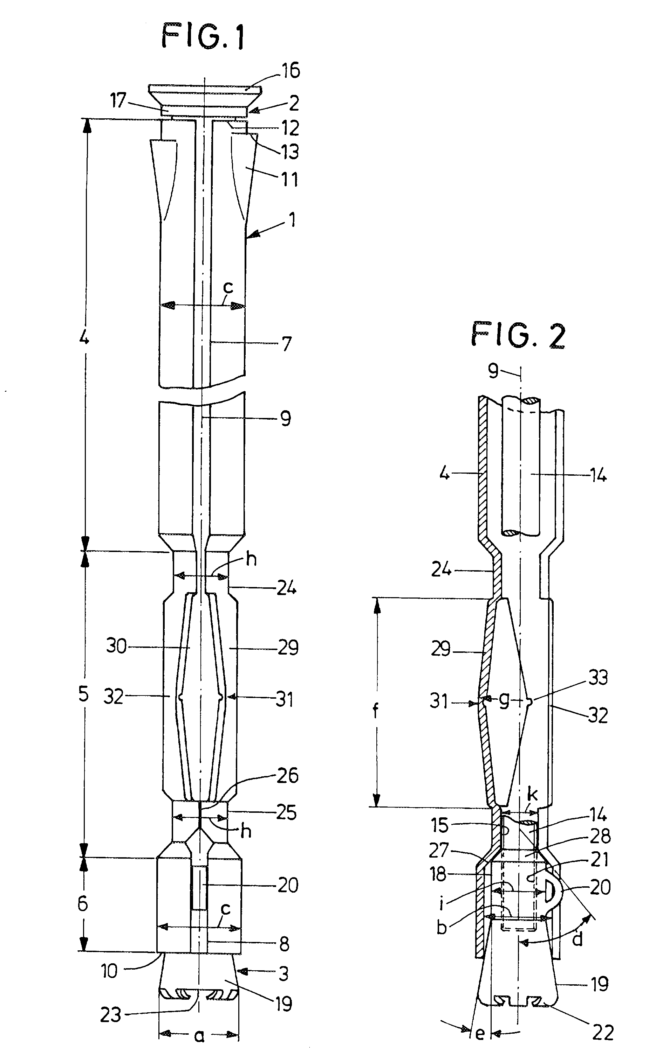

Der in den Fig. 1 und 2 dargestellte Spreizdübel besteht aus drei Teilen, nämlich einer Spreiz-Hülse 1, einer Spreiz-Schraube 2 und einem Spreiz-Konus 3.

Die Spreiz-Hülse 1 weist einen zylindrischen Trag-Abschnitt 4, einen sich daran anschließenden Hohlraum-Spreiz-Abschnitt 5 und einen ebenfalls wieder zylindrischen End-Spreiz-Abschnitt 6 auf. Sie ist aus Blech gebogen, wobei längs des Trag-Abschnittes 4 ein Längsschlitz 7 und längs des End-Spreiz-Abschnittes 6 ein mit dem Längsschlitz 7 fluchtender Schlitz 8 ausgebildet ist. Die Schlitze 7, 8 verlaufen parallel zur Mittel-Längs-Achse 9. Im Bereich des dem Einschub-Ende 10 entgegengesetzten Endes können ein oder mehrere zusätzliche Schlitze im zylindrischen Trag-Abschnitt 4 ausgebildet sein. Dort befinden sich auch zwei aus der Spreiz-Hülse 1 herausgeformte Vorsprünge 11, deren dem benachbarten Rand 12 des Trag-Abschnittes 4 zugewandte Stirnflächen als Auflageflächen 13 für am Mauerwerk od.dgl. zu befestigende Gegenstände, wie beispielsweise Rahmen od.dgl., insbesondere Fensterrahmen oder Türrahmen, dienen.

Die Spreiz-Schraube 2 weist einen zylindrischen Bolzen 14 auf, der zumindest über einen Teil seiner Länge mit einem Außengewinde 15 versehen ist, das in den Spreiz-Konus 3 hineingeschraubt wird. Die Schraube 2 weist weiterhin einen Kopf 16 auf, der mit einem dem Bolzen 14 zugewandten Ringbund 17 versehen ist, der gegen den Rand 12 der Hülse 1 anliegt, so daß eine lagegenaue Abstützung des Kopfes 16 der Schraube 2 gegen die Hülse 1 erreicht wird. Bei Anziehen der Spreiz-Schraube 2 wird somit der Spreiz-Konus 3 in Richtung auf den Kopf 16 hin bewegt und weitet die Spreiz-Hülse 1 in noch im einzelnen zu beschreibender Weise auf.

Der Spreiz-Konus 3 ist aus Stahlblech gebogen; er weist also eine Wand auf, deren Dicke etwa überall gleich ist. Der Konus 3 weist einen zylindrischen Abschnitt 18 auf, an den sich ein konusförmiger, d.h. kegelstumpfförmiger Abschnitt 19 anschließt. Der größte Durchmesser a des kegelstumpfförmigen Abschnitts 19 ist größer als der Innendurchmesser b des End-Spreiz-Abschnittes 6 der Spreiz-Hülse 1. Der Außendurchmesser a ist etwa gleich aber nicht größer als der Außendurchmesser c des End-Spreiz-Abschnittes 6, so daß der Spreiz-Konus 3 bei unverspreiztem End-Spreiz-Abschnitt 6 radial nicht über diesen vorsteht. Der kegelstumpfförmige Abschnitt 19 des Spreiz-Konus 3 ist also ein Spreizabschnitt. Aus der Wand des zylindrischen Abschnittes 18 ist ein Wandabschnitt ösenartig und radial zur Achse 9 nach außen gebogen, wodurch ein Anschlag 20 gebildet wird. Dieser Anschlag 20 wird bei der Montage des Konus 3 in den Schlitz 8 des End-Spreiz-Abschnittes 6 eingeführt. Hierdurch wird eine Verdrehsicherung zwischen Spreiz-Konus 3 und Spreiz-Hülse 1 geschaffen. Im zylindrischen Abschnitt 18 ist ein Innengewinde 21 zur Aufnahme des Außengewindes 15 des Bolzens 14 ausgebildet. Das Innengewinde 21 läuft am Übergang des zylindrischen Abschnittes 18 in den kegelstumpfförmigen Abschnitt 19 aus.

Am außerhalb der Spreiz-Hülse 1 liegenden Ende des kegelstumpfförmigen Abschnittes 19 sind radial nach innen, also zur Achse 9 hin, gebogene Zungen 22 vorgesehen, die eine stirnseitige Öffnung 23 des Konus 3 begrenzen.

Der Spreiz-Konus 3 besteht aus Stahlblech, wobei ein relativ weicher Stahl eingesetzt wird, der gut stanzbar und gut kalt verformbar ist, da die Formung des Konus 3 kalt durch Biegen erfolgt. Der Konus 3 ist durch Einsatzhärtung im Bereich seiner gesamten Oberfläche gehärtet, wodurch sich gehärtete Oberflächenbereiche ergeben, während ein relativ weicher Kernbereich verbleibt. Der dargestellte und beschriebene Konus ist im einzelnen in der EP-A-0 551 629 dargestellt und beschrieben.

Der Hohlraum-Spreiz-Abschnitt 5 weist am Übergang zum Trag-Abschnitt 4 einen gegenüber diesem verjüngten zylindrischen Übergangs-Abschnitt 24 auf. Am Übergang zum End-Spreiz-Abschnitt 6 ist ebenfalls ein zylindrischer Übergangsabschnitt 25 ausgebildet, der in der Flucht von Längsschlitz 7 und Schlitz 8 eine Stoßfuge 26 aufweist, in der also kein freier Schlitz ist. Der Schlitz 8 endet also hier. Zwischen dem Übergangsabschnitt 25 und dem End-Spreiz-Abschnitt 6 ist eine Kegelfläche 27 ausgebildet, deren Öffnungswinkel d zur Mittel-Längs-Achse 9 20° bis 50°, bevorzugt 35° bis 45°, beträgt und sornit erheblich größer ist als der Öffnungswinkel e des kegelstumpfförmigen Abschnittes 19 des Spreiz-Konus 3 zur Mittel-Längs-Achse 9, der 5° bis 10°, bevorzugt 7,5°, beträgt. Der Spreiz-Konus 3 weist am freien Ende seines zylindrischen Abschnittes 18 eine kegelstumpfförmige Schrägfläche 28 auf, die in montiertem, aber ungespreiztem Zustand des Spreizdübels gegen die Kegelfläche 27 anliegt, und deren Öffnungswinkel dem Öffnungswinkel d entspricht.

Zwischen den Übergangsabschnitten 24, 25 sind Längsstege 29 in der Wand des Hohlraum-Spreiz-Abschnittes 5 ausgeformt, zwischen denen in Längsrichtung der Spreiz-Hülse 1 verlaufende Ausnehmungen 30 ausgebildet sind. Die Längsstege 29 haben eine Länge f, die ein Mehrfaches des Außendurchmessers c der Spreiz-Hülse 1 im Bereich ihres End-Spreiz-Abschnittes 6 bzw. ihres Trag-Abschnittes 4 beträgt. Im vorliegenden Fall gilt f = 3 c. Ein zweckmäßiger Bereich ist 2,5 c < f < 3,5 c.

Die Längsstege 29 weisen jeweils in ihrer Mitte Soll-Biegestellen 31 auf, die jeweils zum einen durch eine Einschnürung 32 und zum anderen durch eine Einkerbung 33 an der Innenseite der Längsstege 29 gebildet sind. Durch die Einkerbungen 33 wird jeweils eine Art Scharnier geschaffen. Die Einschnürungen 32 und die Einkerbungen 33 können auch lediglich alternativ vorgesehen sein. Da - wie sich aus den vorstehenden Erläuterungen bereits ergibt - die Übergangsabschnitte 24, 25 einen Außendurchmesser h aufweisen, der deutlich kleiner ist als der Außendurchmesser c des Trag-Abschnittes 4 bzw. des End-Spreiz-Abschnittes 6, sind die Längs-Stege 29 im Bereich ihrer Soll-Biegestellen 31 so weit von der Achse 9 nach außen gebogen, daß in diesem Bereich ihr Außendurchmesser g etwa dem Außendurchmesser c entspricht. Damit wird sichergestellt, daß bei Ausübung einer zwischen den Übergangsabschnitten 24, 25 in Richtung der Achse 9 wirkenden Druckkraft die Längsstege 29 im Bereich ihrer Soll-Biegestellen 31 nach außen gespreizt werden. Für das Verhältnis von Außendurchmesser c und Außendurchmesser h gilt 0,6 c < h < 0,8 c.

Die Kegelfläche 27 bildet zusammen mit der Schrägfläche 28 einen großen Einzugswiderstand gegen ein Einziehen des zylindrischen Abschnittes 18 des Spreiz-Konus 3 in den Übergangsabschnitt 25. Für das Verhältnis von Außendurchmesser i des zylindrischen Abschnittes 18 des Konus 3 zum Innendurchmesser k des Übergangsabschnittes 25 gilt 0,5 i < k < 0,8 i. Die zum Aufspreizen der Längsstege 29 nach außen erforderliche in Richtung der Achse 9 wirkende Kraft ist deutlich kleiner als die zum Einziehen des zylindrischen Abschnittes 18 in den Übergangsabschnitt 25 notwendige Kraft.

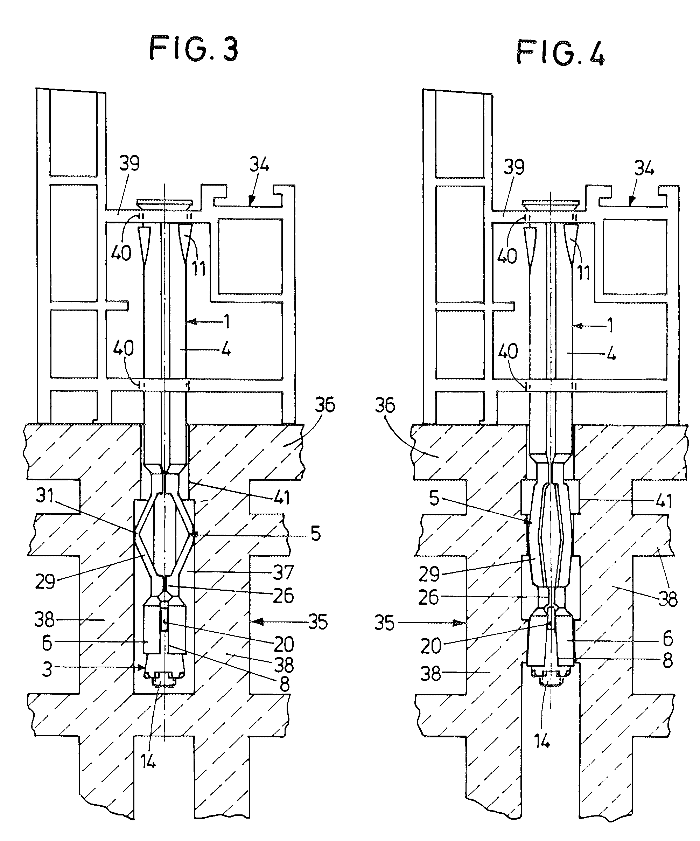

Die Wirkungsweise des Spreizdübels wird nachfolgend anhand der Fig. 3 und 4 erläutert. Dort ist jeweils ein hohl ausgebildeter Rahmen 34, beispielsweise ein Fensterrahmen, dargestellt, der mittels eines geschilderten Spreizdübels an dem aus Gitterziegeln 35 bestehende Mauerwerk befestigt werden soll. Gitterziegel zeichnen sich dadurch aus, daß sie eine durchgehende Außenwand 36 und parallel zu dieser verlaufende kanalartige Hohlräume 37 aufweisen, die durch Gitterstege 38 voneinander getrennt sind. Der Rahmen 34 weist eine Wand 39 auf, von der her zum einen Löcher 40 durch den Rahmen und anschließend eine Bohrung 41 durch den Gitterziegel gebohrt wird. Der Dübel wird durch die Löcher 40 in die Bohrung eingeschoben, wobei die Wand 39 zur Anlage gegen mindestens einen Vorsprung 11 kommt. Wie Fig. 3 entnehmbar ist, befindet sich der zylindrische Trag-Abschnitt 4 der Spreiz-Hülse 1 zum einen im Rahmen 34 und zum anderen in der Außenwand 36 des Gitterziegels 35. Der Hohlraum-Spreiz-Abschnitt 5 und der zylindrische End-Spreiz-Abschnitt 6 befinden sich dagegen in einem Hohlraum 37. Wenn jetzt die Schraube 2 gedreht wird, wird aufgrund des hohen Widerstandes am Übergang vom zylindrischen Abschnitt 18 des Spreiz-Konus 3 zum Übergangsabschnitt 25 der Spreiz-Konus 3 nicht in den End-Spreiz-Abschnitt 6 hineingezogen, sondern die Längsstege 29 werden auseinandergespreizt, bis sie gegen die benachbarten Gitterstege 38 anliegen. Der Spreizdübel ist damit fest in dem Hohlraum 37 verspreizt.

Wenn dagegen der Hohlraum-Spreiz-Abschnitt 5 sich in einer Bohrung 41 in einem Gittersteg 38 befindet, dann können die Längsstege 29 nicht aufgespreizt werden. In diesem Fall wird dann unter Ausübung entsprechend höherer Kräfte durch die Spreiz-Schraube 2 auf den Spreiz-Konus 3 und von diesem auf den End-Spreiz-Abschnitt 6 der zylindrische Abschnitt 18 des Konus 3 über die Kegelfläche 27 unter Öffnung der Stoßfuge 26 in den Übergangsabschnitt 25 hineingezogen und außerdem der End-Spreiz-Abschnitt 6 gespreizt. Wenn sich dieser in einer Bohrung 41 in einem Gittersteg 38 befindet, dann wird er hier verspreizt und festgesetzt, wie es bei konventionellen Spreizdübeln üblich ist.

## Patentansprüche

1. Spreizdübel, bestehend aus einer zumindest über einen Teil ihrer Länge mit mindestens einem Schlitz (7, 8) versehenen Spreiz-Hülse (1), einer konzentrisch zu einer gemeinsamen Mittel-Längs-Achse (9) hierin angeordneten und sich mit einem Kopf (16) an einem Rand (12) eines Trag-Abschnittes (4) der Spreiz-Hülse (1) gegen diese abstützenden Spreiz-Schraube (2) und einem an einem dem Rand (12) entgegengesetzt liegenden Einschub-Ende (10) der Spreiz-Hülse (1) unverdrehbar gegenüber dieser gehaltenen und axial in dieser verschiebbaren Spreiz-Konus (3), der ein Innengewinde (21) zur Aufnahme eines Außengewindes (15) der Spreiz-Schraube (2) und einen Spreizabschnitt (19) zum Aufspreizen des dem Einschub-Ende (10) zugeordneten Bereichs der Spreiz-Hülse (1) beim Hineinziehen dieses Spreizabschnittes mittels der Spreiz-Schraube (2) in die Spreiz-Hülse (1) aufweist, dadurch gekennzeichnet, daß der dem Einschub-Ende (10) zugeordnete Bereich als End-Spreiz-Abschnitt (6) ausgebildet ist, daß zwischen dem End-Spreiz-Abschnitt (6) und dem Trag-Abschnitt (4) ein Hohlraum-Spreiz-Abschnitt (5) angeordnet ist, daß der Hohlraum-Spreiz-Abschnitt (5) im wesentlichen parallel zur Mittel-Längs-Achse (9) verlaufende mit Soll-Biegestellen versehene Längsstege (29) aufweist und daß der End-Spreiz-Abschnitt (6) derart ausgebildet ist, daß dessen Aufspreizen eine höhere von der Spreiz-Schraube (2) auf den Spreiz-Konus (3) in Richtung der Mittel-Längs-Achse (9) aufzubringende Kraft erfordert als das Aufspreizen der Längsstege (29).

2. Spreizdübel nach Anspruch 1, dadurch gekennzeichnet, daß am Übergang vom End-Spreiz-Abschnitt (6) in den Hohlraum-Spreiz-Abschnitt (5) ein gegenüber dem End-Spreiz-Abschnitt (6) verjüngter Übergangsabschnitt (25) vorgesehen ist, der so ausgebildet ist, daß das Einziehen des Spreiz-Konus (3) in diesen Übergangsabschnitt (25) eine höhere Kraft erfordert, als das Aufspreizen der Längsstege (29).

3. Spreizdübel nach Anspruch 2, dadurch gekennzeichnet, daß zwischen dem End-Spreiz-Abschnitt (6) und dem verjüngten Übergangsabschnitt (25) eine Spreizfläche (27) ausgebildet ist.

4. Spreizdübel nach Anspruch 3, dadurch gekennzeichnet, daß die Spreizfläche als Kegelfläche (27) ausgebildet ist.

5. Spreizdübel nach Anspruch 3, dadurch gekennzeichnet, daß die Spreizfläche (27) einen Öffnungswinkel (d) gegenüber der Mittel-Längs-Achse (9) aufweist, der deutlich größer ist als der Öffnungswinkel (e) des Spreizabschnittes (19) des Spreiz-Konus (3) gegenüber der Mittel-Längs-Achse (9).

6. Spreizdübel nach Anspruch 1, dadurch gekennzeichnet, daß die Soll-Biegestellen (31) in Form von an den Innenseiten der Längsstege (29) ausgebildeten Einkerbungen (33) ausgestaltet sind.

7. Spreizdübel nach Anspruch 1, dadurch gekennzeichnet, daß die Soll-Biegestellen (31) in Form von in dem mittleren Bereich der Längsstege (29) ausgebildeten Einschnürungen (32) ausgestaltet sind.

8. Spreizdübel nach Anspruch 1, dadurch gekennzeichnet, daß für das Verhältnis der Länge (f) der Längsstege (29) zum Außendurchmesser (c) des End-Spreiz-Abschnittes (6) gilt 2,5 c < f < 3,5 c.

9. Spreizdübel nach Anspruch 5, dadurch gekennzeichnet, daß für den Öffnungswinkel (d) der Spreizfläche (27) gilt 20° < d < 50° und bevorzugt 35° < d < 45°.

10. Spreizdübel nach Anspruch 5, dadurch gekennzeichnet daß am Spreiz-Konus (3) eine der Spreizfläche (27) zugeordnete Schrägfläche (28) ausgebildet ist.

## Claims

1. Expansion dowel, consisting of an expanding sleeve (1) provided, at least over part of its length with a slot (7, 8), an expanding screw (2) arranged therein concentrically of a common central longitudinal axis (9), a head (16) of the expanding screw (2) supporting itself on a rim (12) of a supporting section (4) of the expanding sleeve (1) against the latter, and an expanding cone (3) secured on a plug-in end (10), opposite the rim (12), of the expanding sleeve (1) non-rotatably referred to the expanding sleeve (1) and axially displaceably therein, the expanding cone (3) comprising an internal thread (21) for the accommodation of an external thread (15) of the expanding screw (2) and comprising an expanding section (19) for the expansion of the section of the expanding sleeve (1) associated to the plug-in end (10) upon insertion of this expanding section (1) into the expanding sleeve (1) by means of the expanding screw (2), characterized in that the section associated to the plug-in end (10) is an end expanding section (6), in that a cavity expanding section (5) is arranged between the end expanding section (6) and the supporting section (4), in that the cavity expanding section (5) comprises longitudinal webs (29) running essentially parallel to the central longitudinal axis (9) and provided with predetermined bending points, and in that the end expanding section (6) is such that its expansion demands for a higher force to be applied by the expanding screw (2) on the expanding cone (3) in the direction of the central longitudinal axis (9) than the expansion of the longitudinal webs (29).

2. Expansion dowel according to claim 1, characterized in that a transitional section (25) tapered in relation to the end expanding section (6), is provided at the transition of the end expanding section (6) into the cavity expanding section (5), this transitional section (25) being formed such that the insertion of the expanding cone (3) into this transitional section (25) requires a higher force than the expansion of the longitudinal webs (29).

3. Expansion dowel according to claim 2, characterized in that an expanding surface (27) is formed between the end expanding section (6) and the tapered transitional section (25).

4. Expansion dowel according to claim 3, characterized in that the expanding surface is formed as a conical surface (27).

5. Expansion dowel according to claim 3, characterized in that the expanding surface (27) has an aperture angle (d) in relation to the central longitudinal axis (9), this opening angle being clearly wider than the aperture angle (e) of the expanding section (19) of the expanding cone (3) in relation to the central longitudinal axis (9).

6. Expansion dowel according to claim 1, characterized in that the predetermined bending points (31) are notches (33) which are formed on the inner sides of the longitudinal webs (29).

7. Expansion dowel according to claim 1, characterized in that the predetermined bending points (31) are neckings (32) which are formed in the central area of the longitudinal webs (29).

8. Expansion dowel according to claim 1, characterized in that 2.5 c < f < 3.5 c applies to the relation of the length (f) of the longitudinal webs (29) to the outside diameter (c) of the end expanding section (6).

9. Expansion dowel according to claim 5, characterized in that 20° < d < 50°, and preferably 35° < d < 45° applies to the aperture angle (d) of the expanding surface (27).

10. Expansion dowel according to claim 5, characterized in that an inclined surface (28) is formed on the expanding cone (3), this inclined surface (28) being associated with the expanding surface (27).

## Revendications

1. Cheville à expansion, constituée d'une douille à expansion (1) pourvue, au moins sur une partie de sa longueur, d'au moins une fente (7, 8), d'une vis d'écartement (2) placée concentriquement à un axe longitudinal médian (9) commun, à l'intérieur de la douille, et prenant appui par une tête (16) contre la douille à expansion (1), sur un bord (12) d'une section porteuse (4) de celle-ci, et d'un cône d'écartement (3) maintenu immobile en rotation, par rapport à la douille à expansion (1), à une extrémité d'introduction (10) de celle-ci, située à l'opposé du bord (12), et déplaçable axialement dans ladite douille à expansion, cône d'écartement (3) qui présente un taraudage (21) destiné à recevoir un filetage mâle (15) de la vis d'écartement (2) et une section d'écartement (19) destinée à ouvrir par écartement la partie, associée à l'extrémité d'introduction (10), de la douille à expansion (1), lorsque cette section d'écartement est tirée dans la douille à expansion (1) au moyen de la vis d'écartement (2), caractérisée en ce que la partie associée à l'extrémité d'introduction (10) est réalisée sous forme d'une section d'extrémité à écartement (6), en ce que, entre la section d'extrémité à écartement (6) et la section porteuse (4), est disposée une section pour espace creux à écartement (5), en ce que la section pour espace creux à écartement (5) présente des barrettes longitudinales (29) s'étendant essentiellement parallèlement à l'axe longitudinal médian (9) et pourvues de points destinés à la flexion, et en ce que la section d'extrémité à écartement (6) est réalisée d'une manière telle que son ouverture par écartement nécessite d'appliquer, par la vis d'écartement (2), sur le cône d'écartement (3), une force orientée dans la direction de l'axe longitudinal médian (9), qui est plus élevée que pour l'ouverture par écartement des barrettes longitudinales (29).

2. Cheville à expansion selon la revendication 1, caractérisée en ce que, à la transition entre la section d'extrémité à écartement (6) et la section pour espace creux à écartement (5), est prévue une section de transition (25), rétrécie par rapport à la section d'extrémité à écartement (6) et réalisée d'une manière telle que l'introduction du cône d'écartement (3) dans cette section de transition (25) nécessite une force plus élevée que pour l'ouverture par écartement des barrettes longitudinales (29).

3. Cheville à expansion selon la revendication 2, caractérisée en ce qu'une surface d'écartement (27) est réalisée entre la section d'extrémité à écartement (6) et la section de transition (25) rétrécie.

4. Cheville à expansion selon la revendication 3, caractérisée en ce que la surface d'écartement est réalisée sous forme d'une surface conique (27).

5. Cheville à expansion selon la revendication 3, caractérisée en ce que la surface d'écartement (27) présente, par rapport à l'axe longitudinal médian (9), un angle d'ouverture (d) qui est nettement plus grand que l'angle d'ouverture (e) de la section d'écartement (19) du cône d'écartement (3) par rapport à l'axe longitudinal médian (9).

6. Cheville à expansion selon la revendication 1, caractérisée en ce que les points destinés à la flexion (31) sont conçus sous la forme d'entailles (33) ménagées dans les faces intérieures des barrettes longitudinales (29).

7. Cheville à expansion selon la revendication 1, caractérisée en ce que les points destinés à la flexion (31) sont conçus sous la forme de resserrements (32) réalisés dans la zone médiane des barrettes longitudinales (29).

8. Cheville à expansion selon la revendication 1, caractérisée en ce que la relation entre la longueur (f) des barrettes longitudinales (29) et le diamètre extérieur (c) de la section d'extrémité à écartement (6) est 2,5 c < f < 3,5 c.

9. Cheville à expansion selon la revendication 5, caractérisée en ce que l'angle d'ouverture (d) de la surface d'écartement (27) satisfait à 20° < d < 50° et, de préférence, à 35° < d < 45°.

10. Cheville à expansion selon la revendication 5, caractérisée en ce qu'une surface oblique (28), associée à la surface d'écartement (27), est réalisée sur le cône d'écartement (3).
